(19) Europäisches Patentamt
European Patent Office
Office européen des brevets

(11) **EP 2 279 275 B1**

(12) **FASCICULE DE BREVET EUROPEEN**

(45) Date de publication et mention
de la délivrance du brevet:
**28.08.2013 Bulletin 2013/35**

(21) Numéro de dépôt: **09750037.5**

(22) Date de dépôt: **05.05.2009**

(51) Int Cl.:
*C22C 38/18* (2006.01)     *C22C 38/58* (2006.01)
*C22C 38/22* (2006.01)     *B29C 33/38* (2006.01)

(86) Numéro de dépôt international:
**PCT/FR2009/050822**

(87) Numéro de publication internationale:
**WO 2009/141556 (26.11.2009 Gazette 2009/48)**

(54) **BLOC OU TOLE EN ACIER À HAUTES CARACTÉRISTIQUES POUR PIÈCES MASSIVES**

BLOCK ODER BLECH AUS STAHL MIT HOHEN EIGENSCHAFTEN FÜR MASSIVE TEILE

BLOCK AND SHEET MADE OF STEEL WITH HIGH PROPERTIES FOR BULKY PARTS

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**
Etats d'extension désignés:
**AL BA RS**

(30) Priorité: **06.05.2008 EP 08300199**

(43) Date de publication de la demande:
**02.02.2011 Bulletin 2011/05**

(73) Titulaire: **INDUSTEEL CREUSOT
93200 Saint-Dénis (FR)**

(72) Inventeurs:
• **BEGUINOT, Jean
F-71200 Le Creusot (FR)**
• **NGOMO, Valéry
F-71200 Le Creusot (FR)**

(74) Mandataire: **Blot, Philippe Robert Emile
Cabinet Lavoix
2, place d'Estienne d'Orves
75441 Paris Cedex 09 (FR)**

(56) Documents cités:
**EP-A- 0 882 808        DE-C- 651 845
FR-A- 2 241 624        JP-A- 6 184 695
JP-A- 2001 294 973     US-A- 5 139 737
US-A- 5 759 299        US-A- 5 855 845
US-A1- 2005 115 644**

EP 2 279 275 B1

**Description**

La présente invention est relative à un acier à haute résistance destiné notamment à la fabrication de pièces de grande dimension telles que des pièces de moules pour matière plastique, des pièces d'outillage telles que des matrices, ou des pièces d'usure telles que des pièces destinées à résister à l'abrasion.

Pour de nombreuses applications, les pièces de mécanique qui sont soumises à des efforts importants ou à des sollicitations à l'usure très importantes doivent être réalisées dans des aciers ayant des résistances mécaniques élevées correspondant à des duretés comprises entre 300 et 500 HB, mais qui doivent cependant rester suffisamment tenaces, usinables, soudables, etc... Ces pièces sont, en général, obtenues par découpage et usinage de tôles ou de blocs de forte épaisseur. Un bloc qui est de forme généralement parallélépipédique est obtenu par forgeage d'un lingot. Une tôle est obtenue par laminage d'un lingot ou d'une brame.

Pour ces objets de forme généralement parallélépipédique, l'épaisseur est la plus faible dimension. Pour les blocs ou les tôles considérées ici, l'épaisseur est supérieure à 10 mm et peut atteindre 1 mètre.

Sur des blocs ou des tôles de ce type constitués des aciers précités, on constate souvent l'existence de points durs qui résultent de ségrégations. Ces ségrégations correspondent à des variations locales de composition chimique qui résultent des phénomènes de solidification des lingots à partir desquels les blocs sont réalisés. Ces points durs présentent plusieurs inconvénients. En effet, ils peuvent avoir pour conséquence de rendre l'usinage ou le polissage régulier difficile, ce qui peut poser des problèmes de réalisation de pièces pour lesquelles la précision géométrique et la qualité de surface sont importants. Ces variations de dureté peuvent également avoir pour conséquence de générer des zones fragiles qui peuvent être des sites préférentiels d'amorçage de fissure, nuisibles notamment à la ténacité globale des pièces, mais également à la soudabilité ou à l'aptitude à la découpe thermique des pièces.

Ces problèmes de ségrégation sont d'autant plus marqués que les pièces considérées sont de section importante. C'est le cas, en particulier des pièces dont la section peut atteindre plusieurs décimètres voire plus d'un mètre, notamment du fait de la nécessité d'ajouter des éléments d'alliage en quantité importante pour obtenir une trempabilité suffisante pour permettre de réaliser de telles pièces.

US 5 759 299 décrit un acier destiné à fabriquer des rails et n'aborde pas la question des veines ségréguées.

FR 2 241 624 décrit des tôles laminées à chaud d'épaisseur comprise entre 3 et 13 mm destinées à être embouties pour fabriquer des pare-chocs d'automobile, des panneaux de carrosserie, des bacs à huile et des roues, ainsi que des supports de pare-chocs, des éléments de châssis et de pièces tubulaires. La question des veines ségréguées n'est pas non plus abordée dans ce document.

Afin de réduire l'importance des zones ségrégées, on utilise parfois des techniques de fabrication de lingot du type refusion sous laitier électro-conducteur (ESR) ou refusion sous vide. Ces techniques sont particulièrement efficaces pour obtenir des pièces de grande dimension très homogènes, et par conséquent ayant des propriétés d'emploi satisfaisantes. Cependant, elles présentent l'inconvénient d'être extrêmement coûteuses. De ce fait, ces techniques sont utilisées essentiellement pour des pièces pour lesquelles de très hautes performances sont exigées et qui, compte tenu de leurs utilisations, peuvent supporter des coûts de fabrication très élevés.

Afin de réduire l'effet de cette ségrégation, on a également proposé d'utiliser des traitements thermiques d'homogénéisation. Ces traitements thermiques, ont pour but d'atténuer les variations de composition chimique locales par diffusion des éléments chimiques des zones les plus chargées vers les zones les moins chargées. Ils présentent l'inconvénient d'être extrêmement longs et donc d'être extrêmement coûteux.

Le but de la présente invention est de remédier à ces inconvénients en proposant un acier qui permet d'obtenir des caractéristiques mécaniques élevées pouvant atteindre 400HB, voire 450 HB, y compris à coeur de pièces très massives, tout en présentant des variations de dureté dues aux ségrégations relativement faibles.

A cet effet, l'invention a pour objet un bloc ou une tôle en acier selon la revendication 1.

Les revendications dépendantes 2 à 7 précisent des caractéristiques facultatives de ce bloc ou de cette tôle.

L'invention concerne également des procédés selon les revendications 8 et 9.

L'invention va maintenant être décrite de façon plus précise mais non limitative en regard de l'unique figure annexée et illustrée par des exemples.

La figure annexée est un graphique montrant la teneur en carbone à viser en fonction de dureté souhaitée pour un acier à haute caractéristique selon l'invention, après un revenu à 550°C (courbe 1) ou après un revenu en dessous de 500°C (courbe 2), pour une composition de base : 0,15% de silicium, 3,3% de manganèse, 3% de chrome, 0,25% de molybdène et pour des blocs qui ont été refroidis à l'air après normalisation à 900°C.

Afin de réaliser des pièces de très fortes épaisseurs, l'épaisseur étant supérieure à 10 mm et pouvant atteindre 500 mm voire dépasser 1 mètre, et pour que la dureté moyenne soit bien homogène entre le coeur et la surface, il est nécessaire d'utiliser un acier dont la trempabilité est suffisante afin d'obtenir une structure homogène sans qu'il soit nécessaire de réaliser une trempe dans un milieu de trempe trop brutal. En effet, plus le milieu de trempe est brutal, plus les variations de vitesses de refroidissement à l'intérieur du bloc sont importantes et, de ce fait, plus les risques d'obtenir une hétérogénéité de structure sont importants. En revanche, lorsque la trempabilité est suffisante, un refroidissement à l'air, et en particulier à l'air calme, qui conduit à des différences relativement modestes de refroidissement entre la surface et le coeur permet d'obtenir une structure satisfaisante qui est alors bien homogène. Naturellement, ces conditions de trempe n'ont pas d'incidence directe sur le problème des variations locales de dureté résultant des ségrégations.

Afin d'obtenir une trempabilité suffisante, on considère en général qu'il est nécessaire d'utiliser des compositions chimiques fortement chargées en éléments d'alliage. Cependant, ces éléments d'alliage ont pour effet d'induire des ségrégations qui peuvent être importantes.

Bien qu'il soit considéré généralement que, plus les éléments d'alliage ont tendance à ségréger, plus leur incidence sur l'écart de dureté des veines ségrégées est important, les inventeurs ont constaté de façon tout à fait nouvelle et inattendue qu'il n'y avait pas de corrélation entre l'intensité du sur-durcissement en veine ségrégée en éléments d'alliage et les propensions respectives à ségréger de chacun de ces éléments d'alliage.

La propension à ségréger des éléments d'alliage et leurs effets sur les duretés des veines ségrégées est illustrée par les essais suivants, au cours desquels on a réalisé six coulées d'acier en lingot de trois tonnes dont les compositions, exprimées en $10^{-3}\%$ en poids, sont reportées au tableau 1.

Tableau 1.

|   | C | Si | Mn | Cr | Mo | Ni |
|---|---|----|----|----|----|----|
| **1** | 170 | 200 | 1500 | 2800 | 100 | 1500 |
| **2** | 170 | 500 | 1500 | 2800 | 100 | 1500 |
| **3** | 170 | 200 | 2800 | 2800 | 100 | 1500 |
| **4** | 170 | 200 | 1500 | 1300 | 100 | 1500 |
| **5** | 170 | 200 | 1500 | 2800 | 400 | 1500 |
| **6** | 170 | 200 | 1500 | 2800 | 100 | 200 |

Ces lingots ont été laminés pour en faire des tôles épaisses de 50 mm qui ont été découpés de façon à constituer des échantillons sur lesquels on a mesuré à la fois la dureté moyenne et les durcissements dus aux ségrégations. Les échantillons prélevés sur chacune des tôles ont été examinés d'une part à l'état brut de refroidissement dans lequel ils avaient une structure martensitique, et d'autre part à l'état revenu à une température de 500°C auquel ils avaient une structure martensitique revenue.

Sur chacun des échantillons, on a mesuré concurremment, dans les veines ségrégées :

- les taux de ségrégation moyens de chacun des différents alliages (Si, Mn, Cr, Mo, Ni) au moyen de dosages microsonde. La tendance à ségréger propre à chaque élément a été caractérisée au moyen du ratio (%) rapportant l'écart entre composition moyenne en veine ségrégée Cv et composition à la coulée C0 à la valeur de cette dernière (soit : (Cv - C0)/C0) ;
- la dureté moyenne des veines ségrégées, au moyen d'essais classiques de type Vickers sous 300 g. Le sur-durcissement en veines correspond à l'écart entre la dureté moyenne des veines et celle de la matrice environnante hors veines. En comparant ensuite ces mesures entre coulées prises deux à deux, on peut déduire la contribution au sur-durcissement en veines attribuable spécifiquement à la ségrégation de chaque élément d'alliage.

La part de sur-durcissement en veines attribuable à un élément est la résultante de la ségrégation de cet élément c'est à dire, par définition, le produit de la teneur nominale en cet élément par son taux de ségrégation. Par conséquent on comparera valablement les éléments quant à leur nocivité à cet égard en rapportant chaque fois la contribution au sur-durcissement à un même niveau référence de teneur nominale (on a choisi arbitrairement 0,2%).

Ainsi, à titre d'exemple, l'écart de dureté moyenne de 33 HV trouvé entre les coulées 1 et 3 (à 1,5% et 2,8 % de Mn) conduit à évaluer un sur-durcissement de 33x(0,2% /1,3%) = 5 Hv pour 0,2 % de Mn (cf. tableau ci-après).

Les résultats sont représentés au tableau 2 ci-dessous.

Tableau 2.

| Eléments d'alliage | Tendance propre de l'élément à ségréger | Effet sur-durcissant (Hv) constaté en veines ségrégées rapporté à 0,2% d'alliage (après revenu) |
|---|---|---|
| Si | 35% | 8 |

(suite)

| Eléments d'alliage | Tendance propre de l'élément à ségréger | Effet sur-durcissant (Hv) constaté en veines ségrégées rapporté à 0,2% d'alliage (après revenu) |
|---|---|---|
| Cr | 26% | 17 |
| Mn | 42% | 5 |
| Mo | 67% | 70 |
| Ni | 32% | 3 |

Exprimée en termes qualitatifs, la tendance propre de chaque élément à ségréger et son effet de durcissement en veine ségrégée sont indiqués au tableau 3 ci-dessous.

Tableau 3.

| Eléments d'alliage | Tendance propre de l'élément à ségréger | Effets sur-durcissants (Hv) constatés en veines ségrégées |
|---|---|---|
| Si | Moyen | Faible |
| Cr | Faible | Moyen |
| Mn | Assez Fort | Très faible |
| Mo, V | Fort | Très fort |
| Ni | Moyen | Très faible |

Au vu de ces résultats, il apparaît que, contrairement aux idées généralement admises, afin d'obtenir une très bonne trempabilité tout en ayant de faible ségrégation, il est souhaitable de choisir une composition comprenant beaucoup de manganèse, peu de chrome et peu de molybdène, il peut être également intéressant de prévoir beaucoup de nickel. Cependant le nickel étant un élément très coûteux, il est préférable d'utiliser plutôt du manganèse que du nickel.

De ces résultats, il apparaît que, pour réaliser des aciers permettant de fabriquer des pièces de très grandes dimensions à haute caractéristique et ayant des variations de dureté résultant des ségrégations relativement faibles, il est souhaitable d'utiliser un acier dont la composition satisfait aux conditions suivantes :

- carbone : de 0,03% à 0,2% en % en poids, cet élément a pour effet principal d'agir sur la dureté de la martensite, aussi sa teneur est choisie en fonction du niveau de dureté que l'on souhaite obtenir sur les pièces. Pour déterminer la teneur en carbone en fonction de la dureté visée, on peut par exemple diviser l'échelle de dureté par tranches de 40HB, entre 320HB et 440HB. Ces domaines correspondent à peu près à des domaines classiques d'utilisation des aciers résistants à l'abrasion ou des aciers pour outillage.

On peut également considérer les domaines de teneur en carbone suivants, de 0,03% à 0,06% de carbone, de 0,07% à 0,15%, de 0,16% à 0,20% de carbone. A chacun de ces domaines de teneur en carbone correspond, pour un traitement thermique déterminé, un domaine de dureté. En effet, selon que l'acier a subi un revenu vers 550°C ou n'a pas subi de revenu ou n'a subi qu'un traitement à une température sensiblement inférieure à 500°C, le niveau de dureté pour une teneur en carbone identique n'est pas le même. D'une façon générale, le domaine de dureté le plus faible correspondant à la teneur en carbone la plus faible et le domaine de dureté la plus élevé à la teneur en carbone la plus élevée. Cependant, les frontières de ces domaines de teneur en carbone correspondant aux duretés varient légèrement en fonction des teneurs dans les autres éléments d'alliage et en fonction de la vitesse de refroidissement, et également en fonction du traitement thermique qui est effectué sur les pièces.

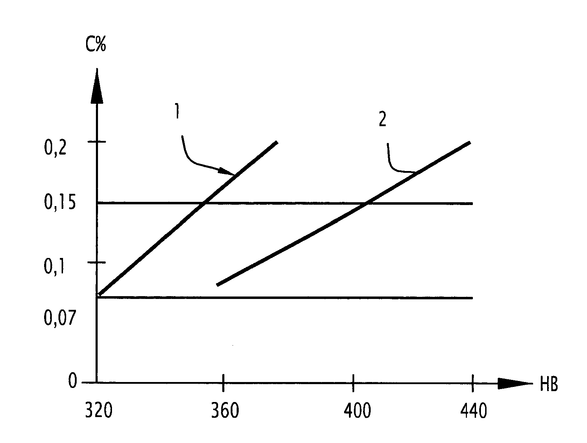

Cette segmentation est illustré par un exemple d'acier dont la composition comprend outre le carbone : 0,15% de silicium, 3,3% de manganèse, 3% de chrome, 0,25% de molybdène. A la figure 1, on a représenté l'évolution de la dureté en fonction de la teneur en carbone pour des blocs qui ont été refroidis à l'air après normalisation à 900°C faisant suite à un laminage à chaud préalable. Les blocs ont subi un revenu pour l'un à 480°C et pour le deuxième à 550°C. Comme on le voit sur la figure, le bloc qui a été revenu à la température de 480°C a une dureté de 360HB pour une teneur en carbone de 0,1 % alors que le même acier revenu à 550°C a une dureté de 320 HB seulement. De même, lorsque l'acier contient environ 0,2% de carbone, le bloc revenu à 480°C a une dureté de l'ordre de 440HB alors que le bloc qui a été revenu à 560°C a une dureté de 375HB. La teneur minimale en carbone 0,03% correspond à une valeur en deçà de laquelle la ségrégation durcissante et l'intérêt attaché à sa réduction deviennent faibles. On notera que les duretés obtenues varient peu par l'application d'un revenu dès lors que sa température ne dépasse pas sensiblement 480°C. Ces résultats sont applicables également à des tôles.

- silicium : Cet élément qui sert notamment à désoxyder le bain d'acier liquide lors de l'élaboration a une teneur en général supérieure à 0,025% et de préférence supérieure à 0,05% ou même, peut dépasser 0,1 %. Cependant, la teneur en cet élément doit rester inférieure à 0,49%, et de préférence rester inférieure à 0,35%, mieux encore inférieure à 0,19%, et, si cela est possible compte tenu des exigences de désoxydation du bain, rester inférieure à 0,1%. En effet, le silicium est un élément qui tend à accroître de façon très importante la ségrégation massive en tête de lingot (ségrégation dite majeure), laquelle sert ensuite à alimenter les veines ségrégées qui sont donc d'autant plus importantes que la ségrégation en tête de lingot est importante. En outre, le silicium tend à dégrader la conductibilité thermique de l'acier, ce qui peut être défavorable dans certaines applications telles que, notamment, les moules de moulage de matière plastique. Enfin, le silicium a un effet néfaste sur la sensibilité à la fragilité de revenu réversible, qui est à prendre en considération, notamment lorsque les vitesses de refroidissement des produits sont faibles, ce qui est le cas pour les applications concernées pour cet acier.
- chrome : Cet élément a un effet favorable sur la trempabilité et, du fait de sa tendance à former des carbures, a un effet favorable sur la résistance à l'adoucissement au revenu, et l'effet de sur-durcissement sur les veines ségrégées est beaucoup moins marqué que celui du molybdène ou du tungstène il doit être ajouté dans des teneurs de préférence supérieures à 1 % et mieux encore supérieures à 2,5%, mais doivent rester inférieures à 5%, et de préférence inférieures à 3,5% et mieux encore être comprises entre 2,7% et 3% afin d'obtenir à la fois la trempabilité suffisante, la résistance à l'adoucissement revenu satisfaisante et en même temps sans conduire à des sur-durcissement trop important des zones ségrégées.

- molybdène et tungstène : ces deux éléments, qui ont une tendance très marquée à former des carbures favorables à une bonne résistance à l'adoucissement au revenu, présentent cependant l'inconvénient d'avoir un effet très important sur les sur-durcissements des zones ségrégées. Aussi, le tungstène ayant le même effet que le molybdène à raison de 2% de tungstène pour 1 % de molybdène, on limitera la somme Mo + W/ 2 à 1 %, de préférence à 0,5%, voire à 0,3%, maximum.
- vanadium, Niobium : Ces éléments ayant des effets extrêmement défavorables sur les sur-duretés des zones ségrégées, l'acier ne fera pas l'objet d'additions volontaires de vanadium ou niobium qui pourront, cependant, exister à l'état de résiduels, la teneur en vanadium devant rester inférieure à 0,010% et mieux, inférieure à 0,005%, et la teneur en niobium devant rester inférieure à 0,050% et mieux, inférieure à 0,010%.
- manganèse : cet élément a un effet très favorable sur la trempabilité et à l'avantage également d'avoir un effet très modeste sur les sur-duretés des zones ségrégées. De ce fait, il est utilisé préférentiellement pour obtenir la trempabilité. Aussi, la teneur en manganèse est comprise entre 3% et 4% de façon à ce que l'effet combiné du manganèse et du carbone sur la trempabilité soit suffisant.
- nickel : Cet élément a un effet favorable sur la trempabilité et un effet modeste sur les sur-duretés des zones ségrégées. Cependant, cet élément est très coûteux, aussi sa teneur est inférieure à 0,9% et de préférence inférieure à 0,5% et mieux encore n'est qu'à des niveaux résiduels.
- cuivre : la teneur en cet élément qui est souvent présent sous forme de résiduel doit rester inférieure à 0,9%, de préférence inférieure à 0,4% et mieux encore plus faible encore, inférieure à 0,2% car cet élément n'a pas d'effet particulièrement favorable sur les propriétés de l'acier considéré.
- aluminium : cet élément qui en a un effet favorable sur la désoxydation du bain d'acier liquide au cours d'élaboration et qui, à l'état solide, permet de contrôler la taille du grain austénitique par formation de nitrure d'aluminium, a une teneur inférieure à 0,1%. Lorsque l'on souhaite globuliser les sulfures éventuellement formés et qui peuvent former des réseaux allongés sources de déchaussement, on préfère ajouter de 0,040 à 0,60 % d'aluminium.
- soufre, Se, Te : le soufre qui est une impureté toujours présente au moins à l'état de trace, peut avoir un effet favorable sur l'usinabilité. Cependant, si les teneurs sont trop importantes il a un effet défavorable sur la ténacité, et éventuellement sur l'aptitude au polissage des aciers. Le sélénium et le tellure, ont des effets comparables à celui du soufre à raison de 2 parts de sélénium pour 1 part de soufre ou de 3 parts de tellure pour 1 part de soufre. Aussi, notamment pour les applications requérant une bonne aptitude à la polissabilité, la somme S + Se/2 + Te/3 est à l'état de trace ou supérieure à 0,005%, mais reste, en tout état de cause, inférieure à 0,020%.

Le reste de la composition est constitué de fer et d'impuretés résultant de l'élaboration.

Pour fabriquer des pièces constituées de l'acier qui vient d'être décrit, on commence par élaborer un acier avec la composition qui est choisie, puis on coule cet acier sous forme d'un demi-produit, par exemple un lingot, qui est mis en forme par déformation plastique à chaud, soit par forgeage soit par laminage.

L'ébauche ainsi obtenue qui constitue un bloc d'acier ou une tôle est alors utilisée soit à l'état brut de laminage ou de forgeage, soit après un traitement thermique adapté à l'utilisation envisagé que l'homme du métier sait choisir.

L'état brut de laminage ou de forgeage est utilisé notamment pour des applications telles que la fabrication de pièces destinées à résister à l'usure dans l'industrie minérale ou les travaux publics, applications dans lesquelles le coût de l'acier est un élément très important du choix.

Lorsque des propriétés plus précises sont souhaitées, les pièces, les tôles ou les blocs bruts de forge ou de laminage éventuellement découpé ou pré usinés sont austénitisés par chauffage à une température supérieure à la température $AC_3$, et en général de l'ordre de 900°C puis trempés par refroidissement à l'air libre, en particulier à l'air calme, ou éventuellement dans un milieu de trempe ayant un refroidissement un peu plus rapide mais sans que cela soit souhaité. Cette austénitisation suivi d'un refroidissement à l'air à l'intérêt de renforcer le rapport de la limite d'élasticité à la résistance à la traction.

On notera que le traitement de trempe peut, le cas échéant, être effectué directement dans la chaude de mise en forme par déformation plastique à chaud, si celle-ci a été effectuée dans des conditions de température adaptées. L'homme du métier sait déterminer de telles conditions.

Les blocs ou les tôles qu'ils soient brut de déformation à chaud où qu'ils soient ré-austénisés et refroidi lentement peuvent avantageusement être soumis à un traitement thermique de revenu à une température supérieure à 450°C mais inférieure à 550°C. Un tel traitement de revenu qui ne change pas de façon significative la dureté, à l'avantage de réduire le niveau de contrainte résiduel dans les bacs ou les pièces tels qu'ils sont directement issus des traitements précédents.

Cette réduction des contraintes internes est particulièrement intéressante pour des pièces de précision obtenues après un usinage très important par enlèvement de matière. De ce point de vue, le traitement de ré-austénisation et de refroidissement lent à l'avantage par rapport à l'état brut de mise en forme à chaud de relaxer au moins une partie des contraintes résiduelles.

Enfin, le traitement de revenu peut avoir l'avantage de renforcer encore un peu le rapport de la limite d'élasticité à la résistance à la traction.

Dans une variante, le traitement de revenu peut être remplacé par un traitement de détente à une température comprise entre 150°C et 250°C.

Un tel traitement de détente ne conduit pas à des variations appréciables de la dureté. En revanche, en général, il conduit à une amélioration significative de la ténacité, ce qui est utile à la fois pour faciliter la mise en oeuvre des produits et d'autre part pour améliorer la durée de vie en service des pièces.

Un tel traitement est particulièrement adapté pour les pièces destinées à travailler dans des conditions qui nécessitent une résistance importante à l'usure par frottement métal sur métal que l'on rencontre dans l'industrie de la mécanique, ou l'usure par abrasion que l'on rencontre dans les travaux publics, dans les mines ou les carrières.

A titre d'exemple, on a réalisé deux coulées d'acier repérées 1 et 2, que l'on a comparé à des aciers repérés C1 et C2, donnés à titre de comparaison.

Avec ces aciers dont les compositions sont données au tableau 4, on a fabriqué des tôles d'épaisseur 150mm par laminage à chaud qui, après refroidissement ont été austénitisées à nouveau par chauffage à 900°C puis refroidies à l'air.

Tableau 4.

| | | C | Si | Mn | Ni | Cr | Mo | V | H | dH | dH/ H (%) | Tf | Soud abil | Econ om |
|---|---|---|---|---|---|---|---|---|---|---|---|---|---|---|
| | C1 | 0,24 | 0,2 | 1,3 | 0,3 | 1,9 | 0,49 | - | 310 | 65 | 21 | 150 | + | ++ |
| | C2 | 0,53 | 0,4 | 0,8 | 1,6 | 1,1 | 0,55 | 0,11 | 395 | 119 | 30 | 41 | + | + |
| | Acier inv **1** rev 550°C | 0,11 | 0,10 | 3,4 | 0,2 | 2,9 | 0,28 | - | 340 | 41 | 12 | 135 | +++ | +++ |
| | Acier inv **2** rev 480°C | 0,13 | 0,15 | 3,2 | 0,2 | 3,0 | 0,22 | - | 405 | 48 | 15 | 105 | ++ | +++ |

Sur les tôles obtenues, on a mesuré la dureté Brinell moyenne (H), l'écart (dH) de dureté entre les parties les plus dures des zones ségrégées et les parties les moins dures des tôles, le rapport entre l'écart de dureté et la densité moyenne (dH/H en %), on a évalué l'usinabilité par un temps de fraisage (Tf), la soudabilité et l'intérêt économique de l'acier.

Les résultats indiqués également au tableau 4 montrent que les aciers selon l'invention, tout en ayant des duretés qui peuvent être relativement importantes puisqu'elles s'échelonnent entre 340HB et 405HB, ont des variations de dureté qui représentent moins de 15% de la dureté moyenne contre plus de 20% pour les aciers selon l'art antérieur. En outre, ces aciers ont une usinabilité satisfaisante, une aptitude au soudage meilleure que celle des aciers donnés à titre de comparaison et sont plus économiques.

**Revendications**

1. Bloc ou tôle en acier à haute résistance dont la composition chimique comprend, en poids :

$$0{,}03\% \ \leq \ C \ < \ 0{,}2\%$$

$$Si \ \leq \ 0{,}49\%$$

$$3\% < \ Mn \leq \ 4\%$$

$$Ni \ \leq \ 0{,}9\%$$

$$1\% \ \leq \ Cr \ \leq \ 5\%$$

$$Mo + W/2 \ \leq \ 1\%$$

$$Cu \ \leq \ 0{,}9\%$$

$$S + Se/2 + Te/3 \ < \ 0{,}020\%$$

$$Al \ \leq \ 0{,}1\%$$

le reste étant du fer et des impuretés résultant de l'élaboration, **caractérisé en ce que** le bloc ou la tôle a une épaisseur supérieure à 20 mm, l'acier a une structure bainitique, martensito-bainitique ou martensitique et **en ce que** l'écart de dureté Brinell entre les zones plus dures et les zones moins dures du bloc ou de la tôle, résultant des veines ségrégées, est inférieure à 20% de la dureté Brinell moyenne du bloc.

2. Bloc ou tôle en acier à haute résistance selon la revendication 1, **caractérisé en ce que** la composition chimique est telle que :

$$Cr \ > \ 2{,}5\%$$

3. Bloc ou tôle en acier à haute résistance selon la revendication 1 ou la revendication 2, **caractérisé en ce que** :

$$Cr \ < \ 3{,}5\%$$

4. Bloc ou tôle en acier selon l'une quelconque des revendications 1 à 3, **caractérisé en ce que** :

$$Ni \ < \ 0,5\%$$

**5.** Bloc ou tôle en acier selon l'une quelconque des revendications 1 à 4, **caractérisé en ce que** :

$$Cu \ < \ 0,4\%$$

**6.** Bloc ou tôle en acier selon l'une quelconque des revendications 1 à 5, **caractérisé en ce que** :

$$Mo + W/2 \ \leq \ 0,3\%$$

**7.** Bloc ou tôle en acier selon l'une quelconque des revendications précédente, **caractérisé en ce que** la composition chimique est telle que :

$$2,7\% \ \leq \ Cr \ \leq \ 3\%$$

$$Mo \ \leq \ 0,3\%$$

**8.** Procédé pour fabriquer un bloc ou une tôle en acier selon l'une quelconque des revendications 1 à 7, **caractérisé en ce que**, après mise en forme par déformation plastique à chaud par forgeage ou par laminage, on effectue une trempe par refroidissement à l'air.

**9.** Procédé pour fabriquer un bloc ou une tôle en acier selon l'une quelconque des revendications 1 à 7, **caractérisé en ce que**, après mise en forme par déformation plastique à chaud par forgeage ou par laminage, on effectue une austénitisation suivie d'une trempe par refroidissement à l'air.


**Patentansprüche**

**1.** Block oder Blech aus hochfestem Stahl, dessen chemische Zusammensetzung auf das Gewicht bezogen

$$0,03\% \ \leq \ C \ < \ 0,2\%$$

$$Si \ \leq \ 0,49 \ \%$$

$$3 \ \% \ < \ Mn \ \leq \ 4 \ \%$$

$$Ni \ \leq \ 0,9\%$$

$$1\% \ \leq \ Cr \ \leq \ 5\%$$

$$Mo \ + \ W/2 \ \leq \ 1\%$$

$$Cu \ \leq \ 0,9\%$$

$$S + Se/2 + Te/3 \leq 0,020\%$$

$$Al \leq 0,1\%$$

umfasst,
wobei der Rest Eisen und Verunreinigungen sind, die sich aus der Bearbeitung ergeben,
**dadurch gekennzeichnet, dass** der Block oder das Blech eine Stärke von größer als 20 mm hat, wobei der Stahl eine Bainitstruktur, eine Martensit-Bainitstruktur oder eine Martensitstruktur hat, und dass die Abweichung der Brinellhärte zwischen den härteren Bereichen und den weniger harten Bereichen des Blocks oder des Blechs, die sich aus den segregierten Adern ergeben, weniger als 20% der mittleren Brinellhärte des Blocks beträgt.

2. Block oder Blech aus hochfestem Stahl gemäß Anspruch 1, **dadurch gekennzeichnet, dass** die chemische Zusammensetzung wie folgt ist:

$$Cr > 2,5\%.$$

3. Block oder Blech aus hochfestem Stahl gemäß Anspruch 1 oder Anspruch 2, **dadurch gekennzeichnet, dass**:

$$Cr < 3,5\%.$$

4. Block oder Blech aus Stahl gemäß irgendeinem der Ansprüche 1 bis 3, **dadurch gekennzeichnet, dass**:

$$Ni < 0,5\%.$$

5. Block oder Blech aus Stahl gemäß irgendeinem der Ansprüche 1 bis 4, **dadurch gekennzeichnet, dass**:

$$Cu < 0,4\%.$$

6. Block oder Blech aus Stahl gemäß irgendeinem der Ansprüche 1 bis 5, **dadurch gekennzeichnet, dass**:

$$Mo + W/2 \leq 0,3\%.$$

7. Block oder Blech aus Stahl gemäß irgendeinem der vorhergehenden Ansprüche, **dadurch gekennzeichnet, dass** die chemische Zusammensetzung wie folgt ist:

$$2,7\% \leq Cr \leq 3\%$$

$$Mo \leq 0,3\%.$$

8. Verfahren zum Herstellen eines Blocks oder eines Blechs aus Stahl gemäß irgendeinem der Ansprüche 1 bis 7, **dadurch gekennzeichnet, dass** nach dem Formen durch plastische Warmverformung durch Schmieden oder Walzen eine Härtung durch Abkühlen an der Luft erfolgt.

9. Verfahren zum Herstellen eines Bocks oder eines Blechs aus Stahl gemäß irgendeinem der Ansprüche 1 bis 7, **dadurch gekennzeichnet, dass** nach dem Formen durch plastische Warmverformung durch Schmieden oder Walzen eine Austenitisierung gefolgt von einer Härtung durch Abkühlen an der Luft erfolgt.

**Claims**

1. High-resistance steel block or sheet, the chemical composition of which comprises, by weight:

$$0.03\% \ \le \ C \ < \ 0.2\%$$

$$Si \ \le \ 0.49\%$$

$$3\% \ < \ Mn \ \le \ 4\%$$

$$Ni \ \le \ 0.9\%$$

$$1\% \ \le \ Cr \ \le \ 5\%$$

$$Mo + W/2 \ \le \ 1\%$$

$$Cu \ \le \ 0.9\%$$

$$S + Se/2 + Te/3 \ < \ 0.020\%$$

$$Al \ \le \ 0.1\%$$

the remainder being iron and impurities resulting from production, **characterised in that** the block or sheet has a thickness greater than 20 mm, the steel has a bainitic, martensito-bainitic or martensitic structure, and **in that** the variation in Brinell hardness between the harder zones and the less hard zones of the block or sheet, resulting from the segregated veins, is less than 20% of the mean Brinell hardness of the block.

2. High-resistance steel block or sheet according to claim 1, **characterised in that** the chemical composition is such that:

$$Cr \ > \ 2.5\%$$

3. High-resistance steel block or sheet according to claim 1 or claim 2, **characterised in that**:

$$Cr \ < \ 3.5\%$$

4. Steel block or sheet according to one of claims 1 to 3, **characterised in that**:

$$Ni \ < \ 0.5\%$$

5. Steel block or sheet according to one of claims 1 to 4, **characterised in that**:

$$Cu \ < \ 0.4\%$$

6. Steel block or sheet according to one of claims 1 to 5, **characterised in that**:

$$Mo + W/2 \leq 0.3\%$$

7. Steel block or sheet according to one of the preceding claims, **characterised in that** the chemical composition is such that:

$$2.7\% \leq Cr \leq 3\%$$

$$Mo \leq 0.3\%$$

8. Method for producing a steel block or sheet according to one of claims 1 to 7, **characterised in that** quenching by air cooling is performed after shaping by hot plastic deformation by forging or by rolling.

9. Method for producing a steel block or sheet according to one of claims 1 to 7, **characterised in that** austenitisation followed by quenching by air cooling is performed after shaping by hot plastic deformation by forging or by rolling.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5759299 A
- FR 2241624